# EUROPÄISCHE PATENTSCHRIFT

(11) **EP 1 004 365 B1**
(45) Veröffentlichungstag und Bekanntmachung des Hinweises auf die Patenterteilung: **21.06.2006**
(21) Anmeldenummer: 99121759.7
(22) Anmeldetag: 03.11.1999
(51) Int. Cl.: B07B 7/06, B65G 53/52

(54) **Fördervorrichtung für Schüttgüter mit Rückhalteeinrichtung für Grobanteil**
Conveying device for bulk material with means for retaining coarse particles
Dispositif de transport pour matières en vrac avec des moyens pour retenir des particules grossieres

(30) Priorität: 28.11.1998 DE 19855030
(43) Veröffentlichungstag der Anmeldung: 31.05.2000
(73) Patentinhaber: MANN + HUMMEL ProTec GmbH, 64625 Bensheim (DE)
(72) Erfinder: Brandauer, Otto, 75471 Mühlacker (DE)
(74) Vertreter: Voth, Gerhard

(56) Entgegenhaltungen:
- DE-A- 3 742 911
- GB-A- 539 188

## Beschreibung

### Stand der Technik

Die Erfindung betrifft eine Fördereinrichtung, insbesondere zur pneumatischen Förderung von Schüttgütern, mit einer Rückhalteeinrichtung für einen im Schüttgut befindlichen Grobanteil oder Fremdkörper nach der Gattung des Patentanspruches 1.

Derartige Fördereinrichtungen sind bekannt. Sie kommen z. B. zur Förderung von Kunststoffgranulat als Rohstoff für Spritzgießmaschinen zum Einsatz. Zur Erzielung guter Spritzgießergebnisse ist die Aussiebung von inhomogenen Materialverklumpungen aus dem Granulat erforderlich. Bei Verwendung von Granulatpulvern, z. B. PVC-Dryblends, müssen vor allem metallische Fremdkörper ausgesiebt werden, da ansonsten die Gefahr einer Staubexplosion bestände. Zu diesem Zweck werden in die pneumatischen Förderanlagen gemäß dem Stand der Technik Wirbelstromsiebmaschinen oder Vibrationssiebe eingebaut. Diese Baugruppen sind maschinell sehr aufwendig in der Konstruktion und infolgedessen ist ihre Anschaffung sehr teuer. Sie benötigen weiterhin relativ viel Platz für den Einbau. Darüber hinaus sind gegebenenfalls zusätzliche Zellenradschleusen notwendig, um die unterschiedlichen Druckniveaus zwischen Siebmaschine und pneumatischer Förderung abzusperren, was einen weiteren Komponentenaufwand hervorruft.

Die GB 539,188 zeigt eine Fördervorrichtung gemäß dem Oberbegriff des Anspruchs 1. Der Fluidstrom überströmt- dabei die Rückhalteeinrichtung, wobei die Grobpartikel durch die Rückhaltevorrichtung aufgefangen werden und der restliche Fluidstrom die Rückhaltevorrichtung passieren kann. Am Ende der Rückhaltevorrichtung ist ein Austrag für die Grobpartikel vorgesehen. Nachteilig ist hierbei die Möglichkeit der Verstopfung der Rückhaltevorrichtung durch die Grobpartikel.

Die Aufgabe der Erfindung ist es eine Rückhalteeinrichtung für Fördervorrichtungen zu schaffen, welche eine Verstopfung durch die Grobpartikel bei gleichzeitiger effizienter Abscheidung verhindert. Eine weitere Aufgabe besteht darin, eine Rückhalteeinrichtung zu schaffen, welche einen geringen Einbauraum benötigt, eine effektive Schutzsiebung gewährleistet und dabei wirtschaftlich in der Herstellung bzw. im Einbau ist. Diese Aufgabe wird durch die Merkmale des Patentanspruches 1 gelöst.

### Vorteile der Erfindung

Die erfinderische Siebeinrichtung ist als integraler Bestandteil der Förderleitung ausgebildet. Sie muß im Einflußbereich einer Rohrumlenkung in der Förderleitung untergebracht sein. Hierdurch wird bewirkt, daß die Schüttgutpartikel aufgrund ihrer Massenträgheit an die äußeren Wandungen des Rohrbogens gedrückt werden und erst nach einer bestimmten Wegstrecke hinter dem Bogen wieder in eine gleichmäßige Verteilung innerhalb des Förderrohrquerschnittes übergehen. Der Einflußbereich der Rohrkrümmung erstreckt sich also über die Rohrkrümmung selbst hinaus in die gerade Rohrstrecke hinein. In diesem Bereich wird die Rückhalteeinrichtung in den Querschnitt der Rohrleitung eingebracht. Diese kann insbesondere aus einem Drahtgitter bestehen. Die Rückhalteeinrichtung wird unter einem Winkel kleiner als 45 ° von dem Fluid mit dem enthaltenen Schüttgut angeströmt. Auf diese Weise gleiten die Schüttgutpartikel an der Rückhalteeinrichtung entlang, wobei sie aufgrund ihrer Trägheit die Durchlaßöffnungen der Rückhalteeinrichtung durchwandern, wenn ihre Größe hinreichend gering ist. Der durchtretende Teil stellt den Feinanteil des Schüttgutes dar. Der Grobanteil des Schüttgutes wird entlang der Rückhalteeinrichtung zu einem Austrag transportiert, durch den dieser der Fördervorrichtung entnommen werden kann.

Die schräge Anordnung der Rückhalteeinrichtung im Rohrquerschnitt ermöglicht es, im Verhältnis zum Rohrquerschnitt eine größere Fläche der Rückhalteeinrichtung vorzusehen. Durch die Unterbringung im Einflußbereich der Umlenkung wird die Abscheidung des Grobanteils des geförderten Schüttgutes weiter unterstützt, da die auf die Schüttgutpartikel wirkende Fliehkraft zu einer schnelleren Durchströmung der Rückhalteeinrichtung führt. Diese Maßnahmen sind also geeignet, eine Verstopfung der Rückhalteeinrichtung zuverlässig zu verhindern.

Eine zweckmäßige Ausbildung sieht vor, die Rückhalteeinrichtung als Siebeinsatz auszubilden, welcher in eine Trennfläche einer hierfür vorgesehenen Flanschverbindung der Förderleitung angeordnet ist. Die Trennfläche der Flanschverbindung muß dementsprechend schräg zur Strömungsrichtung in der Rohrleitung angeordnet sein, damit der Anströmungswinkel des Fluides auf den Siebeinsatz gewährleistet werden kann. Die Flanschverbindung sorgt vorteilhafterweise für eine unkomplizierte Fixierung der Siebeinrichtung im Rohrinneren. Außerdem kann ohne großen Aufwand ein Wechsel der Siebeinrichtung vorgenommen werden. Dies könnte notwendig werden, um verschleißbedingter Abnutzung der Rückhalteeinrichtung vorzubeugen oder einen anderen Abscheidegrad aufgrund unterschiedlicher Maschendichte der Siebeinsätze zu realisieren.

Eine günstige Ausführungsform der Erfindung sieht vor, daß der Austrag für das Grobgut mit einer Grobgutkammer verbunden ist. In dieser kann das abgeschiedene Grobgut gesammelt werden, um in regelmäßigen Abständen dem System entnommen werden zu können. Diese Einrichtung erleichtert den Betrieb der Rückhalteeinrichtung. Alternativ ist eine an den Austrag angeschlossene Förderleitung für das Grobgut denkbar. Diese kann auch mit einem Unterdruck versehen werden, um das Grobgut abzusaugen.

Es ist vorteilhaft, die Grobgutkammer mit einem Füllstandssensor zu versehen. Dieser kann dann anzeigen, wann eine Entleerung notwendig ist. Die Entleerung der Grobgutkammer kann dann in Abhängigkeit von der anfallenden Grobgutmenge erfolgen.

Gemäß einer zweckmäßigen Ausbildung des Erfindungsgedankens ist die Grobgutkammer bzw. der Austrag unterhalb der Rückhalteeinrichtung angeordnet. Auf diese Weise kann die Schwerkraft zur Trennung zwischen Feinanteil und Grobanteil des Schüttgutes genutzt werden. Der Feinanteil durchtritt insbesondere aufgrund der Rohrumlenkung die Rückhalteeinrichtung und wird infolge des in der Rohleitung herrschenden Druckunterschiedes weitertransportiert. Die mit einer größeren Trägheit behafteten Partikel des Grobanteils strömen entlang der Siebeinrichtung und entfernen sich aufgrund der Schwerkrafteinwirkung von dieser. Mit der verbleibenden kinetischen Energie werden sie zum Austrag transportiert und sammeln sich im Grobgutbehälter. Auf diese Weise wird die Funktionszuverlässigkeit der Rückhaltevorrichtung erhöht.

Es kann im Bereich der Grobgutkammer und des Austrags eine Belüftungseinrichtung vorgesehen werden. Mit Hilfe dieser Belüftungseinrichtung kann Zusatzluft in die Rohrleitung eingeblasen werden. Mit der Luft wird dann das abgeschiedene Grobgut durchspült, wobei fälschlicherweise abgeschiedenes Feingut mitgerissen und dem Gutkornstrom wieder zugeführt wird. Materialverluste können somit auf ein Minimum reduziert werden. Außerdem führt die zusätzliche Lufteinleitung zusätzlich zu einer Verringerung der Verstopfungsgefahr der Rückhalteeinrichtung.

Es ist vorteilhaft, die Rohrumlenkung, in die die Rückhalteeinrichtung eingebracht ist, derart anzuordnen, daß eine Umlenkung von der vertikal nach oben gerichteten Strömung in eine andere Richtung stattfindet. Bei 90 °-Rohrbögen wird die vertikale somit in eine horizontale Strömungsrichtung umgelenkt. Eine derartige Anordnung ermöglicht die Ausnutzung der bereits beschriebenen Fliehkraft- und Schwerkrafteinflüsse, deren Überlagerung zu einem optimalen Abscheideergebnis führt. Die Unterbringung der Rückhalteeinrichtung in einem Rohrbogen von 90 ° bietet sich schon allein deswegen an, weil diese Leitungsbereiche naturgemäß in den meisten Leitungskomplexen vorhanden sind. Eine derartig gestaltete Abscheideeinrichtung kann also auch nachträglich in Rohrleitungssysteme eingebaut werden, indem sie anstelle eines Standardkrümmers eingebaut werden. Daher weist die Rückhalteeinrichtung Flansche auf, die eine problemlose Verbindung mit den angrenzenden Rohrleitungsteilen ermöglichen.

Eine weitere Ausgestaltung des Erfindungsgedankens sieht vor, in den Leitungsabschnitten vor bzw. hinter der Rückhalteeinrichtung mindestens einen Drucksensor anzubringen. Mit Hilfe des Drucksensors kann die Funktion der Rückhalteeinrichtung überwacht werden. Auf diese Weise kann z. B. ein außergewöhnlich hoher Differenzdruck in der Siebeinrichtung registriert und daraus resultierend geeignete Maßnahmen eingeleitet werden. Zum Beispiel kann durch Einblasen von Zusatzluft durch die Belüftungseinrichtung eine Reinigung der Rückhalteeinrichtung erfolgen. Weiterhin kann der Druckabfall als Steuergröße für den Austrag des Grobgutes verwendet werden. Sind die in der Rückhalteeinrichtung herrschenden Druckverhältnisse bekannt und sollen konstant gehalten werden, so genügt ein Drucksensor, um den Druckabfall zu registrieren. Flexibler wird das System jedoch, wenn vor und hinter der Rückhalteeinrichtung je ein Drucksensor angebracht werden. Der Druckabfall kann dann durch einen Vergleich der beiden Meßergebnisse bestimmt werden.

### Zeichnung

Weitere Einzelheiten der Erfindung werden in den Zeichnungen anhand von schematischen Ausführungsbeispielen beschrieben. Hierbei zeigen:
- Figur 1: einen als 90 °-Rohrbogen ausgeführten Leitungsabschnitt mit einer Rückhalteeinrichtung, wobei diese als einfach gekrümmter Siebeinsatz ausgeführt ist und
- Figur 2: einen modular aufgebauten 90 °-Rohrbogen, in dem eine Rückhalteeinrichtung mit ebenem Siebeinsatz eingefügt ist.

### Beschreibung der Ausführungsbeispiele

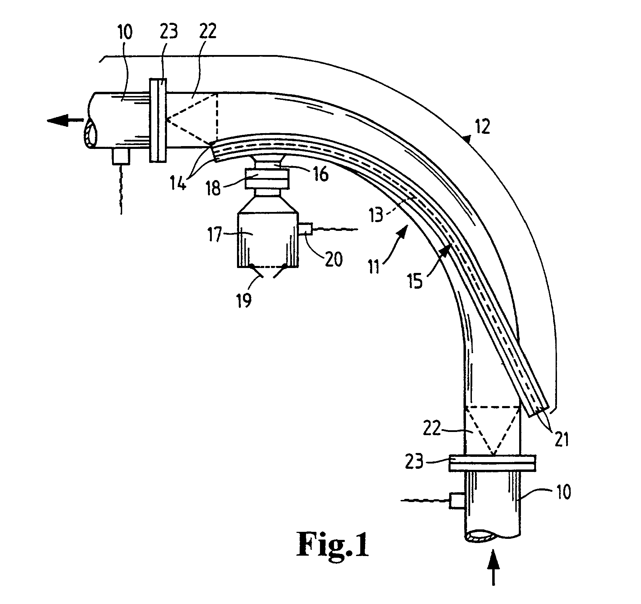

In Figur 1 ist der Ausschnitt einer Förderleitung 10 dargestellt. Die Förderleitung beinhaltet eine Rohrumlenkung 11, welche die ursprünglich vertikal nach oben gerichtete und durch einen Pfeil angedeutete Strömungsrichtung um 90 ° in die Horizontale umlenkt. Die Umlenkung bewirkt, daß sich die Partikel des geförderten Schüttgutes aufgrund ihrer Trägheit in einem über den Rohrbogen hinausgehenden Einflußbereich 12 der Rohrumlenkung an die äußere Wand anlegen. Innerhalb der Rohrumlenkung 11 ist ein einfach gekrümmter Siebeinsatz 13 in eine Flanschverbindung 14 eingebracht, welcher auf einer Rohseite 15 schräg von den Partikeln des Schüttgutes angeströmt wird. Da der Siebeinsatz im wesentlichen der Rohrkrümmung folgt, unterstützen die bereits angesprochenen Trägheitskräfte der Partikel den Durchtritt des Feinanteiles des Schüttgutes durch den Siebeinsatz. Der Grobanteil verbleibt auf der Rohseite 15 und wandert entlang des Siebeinsatzes zu einem Austrag 16, durch den hindurch er unter Einwirkung der Schwerkraft in eine Grobgutkammer 17 fällt. Der Austrag 16 bildet einen Stutzen 18, an den die Grobgutkammer angesetzt ist. Zur Entleerung kann die Grobgutkammer vom Stutzen abgenommen werden. Zu diesem Zweck kann aber auch eine Klappe 19 am Boden der Grobgutkammer angebracht sein. Ein Füllstandssensor 20 ist vorgesehen, um die Notwendigkeit einer Entleerung der Grobgutkammer anzuzeigen.

Der Siebeinsatz selbst (gestrichelt dargestellt) ist in eine Dichtung 21 eingebettet, die durch die Flanschverbindung 14 verpreßt wird. Der Rohrbogen selbst weist eine rechteckige Querschnittsform auf, die z. B. aus Blech hergestellt werden kann. An den beiden Enden des Rohrbogens sind Übergangsstücke 22 vorgesehen, die über Rohrflansche 23 eine Anbindung an die rohrförmige Förderleitung 10 erlauben.

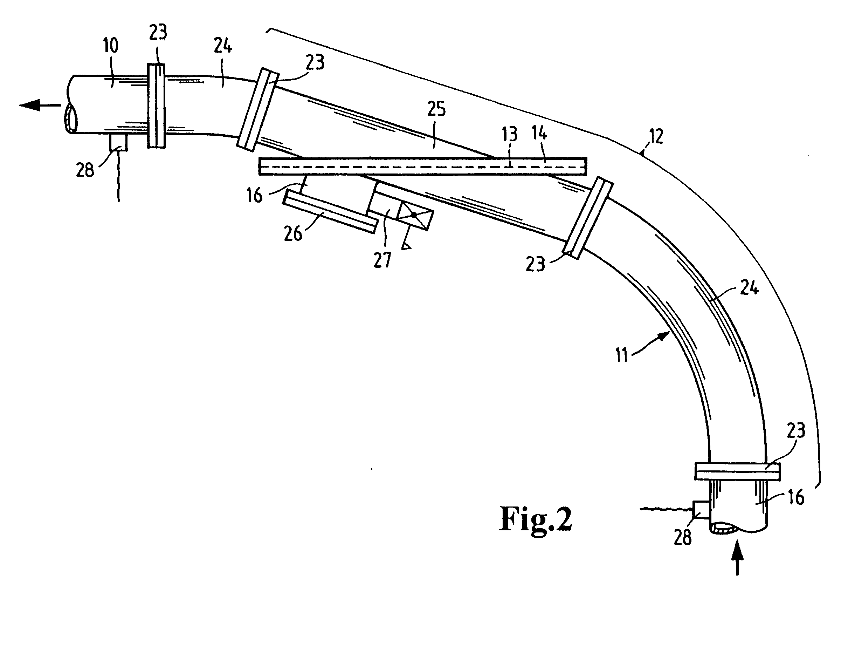

In Figur 2 ist eine Rückhalteeinrichtung dargestellt, die sich aufgrund ihres modularen Aufbaus durch eine Kombination mit Leitungsmodulen 24 in Rohrumlenkungen mit verschiedenen Umlenkwinkeln einbauen läßt. Der Siebeinsatz 16 selbst ist in eine Rohrgerade 25 eingebaut. Dieser muß ein Leitungsmodul 24 vorgeschaltet sein, welche die Rohrumlenkung 11 zumindest einleitet. Der Einflußbereich 12 der Rohrumleitung erstreckt sich dann noch auf die Rohrgerade, so daß die Trägheitseffekte der Schüttgutpartikel genutzt werden können. Der Siebeinsatz ist in dieser Variante eben ausgebildet und in die Flanschverbindung 14 eingebracht, welche schräg zur Durchströmungsrichtung der Rohrgeraden 25 angeordnet ist.

An der Unterseite der Rohrgeraden befindet sich der Austrag 16, der durch einen Deckel 26 verschlossen ist. Durch Öffnen des Deckels kann der abgeschiedene Grobanteil entnommen werden. Am Austrag ist weiterhin eine Belüftungseinrichtung 27 angebracht, die z. B. aus einem Ventil und einer angeschlossenen Druckluftleitung bestehen kann. Das Ventil mündet in den Sammelbereich für das abgeschiedene Grobgut. Durch Öffnen des Ventils wird das Grobgut mit Zusatzluft durchflutet, welche einen fälschlicherweise abgeschiedenen Feinanteil des Schüttgutes dem Gutkornstrom wieder zuführt.

Zur Verbindung der Leitungsmodule 24, der Rohrgeraden 25 und der Förderleitung 10 dienen Rohrflansche 23. Vor und hinter dem Siebeinsatz sind Drucksensoren 28 vorgesehen, welche einen Anstieg des Druckabfalls am Siebeinsatz anzeigen.

## Patentansprüche

1. Fördervorrichtung, umfassend eine Förderleitung (10) und eine mit Durchlassöffnungen versehene Rückhalteeinrichtung (13, 14, 16),
- wobei die Rückhalteeinrichtung von einem geförderten Fluid und einem in diesem befindlichen Feinanteil von Partikeln durchströmbar ist,
- die Durchlassöffnungen eine zur Abscheidung eines Grobanteils von Partikeln im Fluid geeignete Geometrie aufweisen,
- für den Grobanteil ein Austrag (16) vorgesehen ist,
wobei die Rückhalteeinrichtung (13, 14, 16) integraler Bestandteil der Förderleitung (10) ist und eine angeströmte Rohseite (15) aufweist, wobei die Rückhalteeinrichtung derart im Querschnitt der Förderleitung angeordnet ist,
- dass die Rohseite (15) der Rückhalteeinrichtung sich im Bereich (12) einer Rohrumlenkung befindet, wobei der Bereich (12) durch den längenmäßigen Einflussbereich der Zentrifugalkraft auf das geförderte Fluid festgelegt ist und
- dass die Rückhalteeinrichtung unter einem Winkel kleiner als 45° zur Anströmrichtung angeordnet ist, wobei der Austrag (16) mit einer Grobgutkammer (17) zur Sammlung des abgeschiedenen Grobgutes verbunden ist, **dadurch gekennzeichnet, dass** die Grobgutkammer (17) und/oder der Austrag (16) in Richtung der Erdbeschleunigung gesehen unterhalb der Rohseite (15) der Rückhalteeinrichtung angeordnet ist.

2. Fördervorrichtung nach Anspruch 1, wobei die Rückhalteeinrichtung (13, 14, 16) einen Siebeinsatz (13) aufweist, der in der Trennfläche einer hierfür vorgesehenen Flanschverbindung (14) der Förderleitung (10) angeordnet ist.

3. Fördervorrichtung nach einem der vorherigen Ansprüche, wobei die Grobgutkammer (17) einen Füllstandssensor (20) aufweist.

4. Fördervorrichtung nach einem der vorherigen Ansprüche, wobei in der Grobgutkammer (17) oder am Austrag (16) eine Belüftungseinrichtung vorgesehen ist.

5. Fördervorrichtung nach einem der vorherigen Ansprüche, wobei sich die Rohrumlenkung (11) in Strömungsrichtung gesehen an einen von unten nach oben durchströmten Leitungsabschnitt anschließt.

6. Fördervorrichtung nach einem der vorherigen Ansprüche, wobei in der Förderleitung (10) vor und/oder hinter der Rückhalteeinrichtung ein Drucksensor (28) angebracht ist

7. Fördervorrichtung nach einem der vorherigen Ansprüche, wobei diese aus Leitungsmodulen (24) aufgebaut ist, die mit Hilfe von Rohrflanschen (23) miteinander verbunden werden können.

## Claims

1. Conveying apparatus, comprising a conveying line (10) and a retaining device (13,14,16) that is provided with openings,
- wherein the retaining device is traversable by a conveyed fluid and a proportion of fine particles situated in said fluid,
- the geometry of the openings is suitable for separating off a proportion of coarse particles in the fluid,
- an outlet (16) is provided for the proportion of coarse particles,
wherein the retaining device (13, 14, 16) is an integral part of the conveying line (10) and includes an unfiltered side (15) against which the incoming fluid flows, wherein the retaining device is disposed in such a manner in the cross-section of the conveying line
- that the unfiltered side (15) of the retaining device is situated in the region (12) of a deflection of the tube, wherein the region (12) is determined by means of the longitudinal influence region of the centrifugal force on the conveyed fluid and
- that the retaining device is disposed relative to the incoming direction at an angle that is less than 45°, wherein the discharge (16) is connected to a coarse material chamber (17) for collecting the separated coarse material, **characterised in that** the coarse product chamber (17) and/or the discharge (16), when viewed in the direction of gravitational acceleration, is disposed below the unfiltered side (15) of the retaining device.

2. Conveying apparatus according to claim 1, wherein the retaining device (13, 14, 16) includes a sieve insert (13), which is disposed in the parting plane of a flange connection (14) of the conveying line (10) provided for this purpose.

3. Conveying apparatus according to one of the preceding claims, wherein the coarse material chamber (17) includes a level sensor (20).

4. Conveying apparatus according to one of the preceding claims, wherein a ventilating device is provided in the coarse material chamber (17) or at the discharge (16).

5. Conveying apparatus according to one of the preceding claims, wherein the deflection (11) of the tube, when viewed in the direction of flow, connects to a line portion that is traversed from top to bottom.

6. Conveying apparatus according to one of the preceding claims, wherein a pressure sensor (28) is mounted in the conveying line (10) upstream and/or downstream of the retaining device.

7. Conveying apparatus according to one of the preceding claims, wherein the said conveying apparatus is constructed from line modules (24), which can be interconnected with the assistance of tube flanges (23).

## Revendications

1. Dispositif de transport, comprenant une conduite de refoulement (10) et un moyen de retenue (13, 14, 16) muni d'orifices de passage, dont :
- le moyen de retenue peut être traversé par un fluide refoulé et une part de particules fines se trouvant dans celui-ci,
- les orifices de passage présentent une géométrie appropriée par rapport à la séparation d'une part de grosses particules dans le fluide,
- une évacuation (16) est prévue pour la part de grosses particules,
- le moyen de retenue (13, 14, 16) faisant partie d'un seul tenant avec la conduite de refoulement (10) présente une face brute de soufflage (15), en étant disposé dans la section de la conduite de refoulement de telle sorte que :
- la face brute (15) du moyen de retenue se trouve dans la zone (12) d'une dérivation de tuyau, la zone (12) étant définie par la zone d'impact longitudinale de la force centrifuge sur le fluide refoulé, et
- le moyen de retenue fait un angle inférieur à 45° par rapport au sens de soufflage, l'évacuation (16) étant reliée à une chambre de grosses particules (17) pour accumuler les grosses particules séparées,
**caractérisé en ce que**
la chambre de grosses particules (17) et/ou l'évacuation (16) est disposée, vue dans le sens de l'accélération de la pesanteur, en dessous de la face brute (15) du moyen de retenue.

2. Dispositif de transport selon la revendication 1,
**caractérisé en ce que**
le moyen de retenue (13, 14, 16) présente un insert de criblage (13) disposé dans la surface de séparation d'une liaison par brides (14) prévue à cet effet de la conduite de refoulement (10).

3. Dispositif de transport selon l'une des revendications précédentes,
**caractérisé en ce que**
la chambre de produit en vrac (17) présente un capteur de remplissage (20).

4. Dispositif de transport selon l'une des revendications précédentes,
**caractérisé en ce que**
un moyen de ventilation est prévu dans la chambre de produit en vrac (17) ou au niveau de l'évacuation (16).

5. Dispositif de transport selon l'une des revendications précédentes,
**caractérisé en ce que**
la dérivation du tuyau (11), vue dans le sens d'écoulement, se raccorde à une partie de conduite traversée de bas en haut.

6. Dispositif de transport selon l'une des revendications précédentes,
**caractérisé en ce que**
un capteur (28) est monté dans la conduite de refoulement (10) avant et/ou après le moyen de retenue.

7. Dispositif de transport selon l'une des revendications précédentes,
**caractérisé en ce qu'**
il est construit à partir de modules de conduite (24) qui peuvent être reliés entre eux à l'aide de brides de tuyaux (23).
